# EUROPEAN PATENT SPECIFICATION

(11) **EP 2 150 744 B1**
(45) Date of publication and mention of the grant of the patent: **21.09.2011**
(21) Application number: 08750256.3
(22) Date of filing: 13.05.2008
(51) Int. Cl.: F16L 37/47

(54) **QUICK-COUPLING VALVE, PARTICULARLY FOR PRESSURIZED FLUIDS**
SCHNELLKUPPLUNGSVENTIL, IM BESONDEREN FÜR DRUCKFLÜSSIGKEITEN
RACCORD RAPIDE À SOUPAPE, EN PARTICULIER POUR FLUIDES PRESSURISÉS

(30) Priority: 23.05.2007 IT PD20070181
(43) Date of publication of application: 10.02.2010
(73) Proprietor: Officine Meccaniche A.n.i. S.p.a., 36072 Chiampo (IT)
(72) Inventor: COZZA, Oscar, I-36075 Montecchio Maggiore (IT)
(74) Representative: Modiano, Micaela Nadia
(86) International application number: PCT/EP2008/055817
(87) International publication number: WO 2008/141970

(56) References cited:
- GB-A- 1 212 777
- US-A- 3 477 688
- US-A- 4 765 657

## Description

### Technical Field

The present invention relates to a quick-coupling valve, particularly for pressurized fluids.

### Background Art

Quick-coupling valves for pressurized fluids, particularly for gases such as for example air, are currently known which are designed to be interposed between a supply hose, in which for example pressurized air is injected by a compressor, and a user device, such as for example an airbrush or an atomizer.

These known valves comprise, at a first end, a threaded union for reversible fixing to a supply hose and, at the opposite second end, the access to quick-coupling means for a corresponding tubular male element which is rigidly coupled to a delivery hose which is associated with a user device or is part of the user device itself.

Further; these known valves are generally shaped internally so as to have a first intake chamber for the pressurized fluid and a contiguous second discharge chamber, such two chambers being separated by flow control means, which are functionally associated with the quick-coupling means and are designed to block the fluid, preventing it from passing through the valve when the male element is not inserted in the valve.

The quick-coupling means are constituted by a tubular body provided with substantially radial holes for accommodating locking balls; when the male element is not inserted, the balls are pushed radially toward the outside of the tubular body by an annular side wall, which in turn is pushed in an axial direction toward the intake port of the tubular body by a contrast spring; when the male element is inserted, its tip pushes downward the annular side wall that retains the balls, and such balls are pushed so as to exit partially from the holes to enter a corresponding groove formed on the male element; the exit of the balls in a radial direction toward the inside of the tubular body is assisted also by an outer jacket, inside which the tubular body is arranged, such jacket being free to perform an axial translational motion with respect to the tubular body.

An additional contrast spring is interposed between the outer jacket and the tubular body and tends to push the outer jacket toward the port of the tubular body.

The outer jacket, in the part in which it surrounds the holes for the balls of the tubular body, has an engagement region, which has a first inside diameter which is smaller than a contiguous disengagement region which has a second inside diameter which is larger than the first diameter; such outer jacket is thus shaped so that when the male element pushes inward the annular side wall and the balls are free to move, the jacket rises with respect to the tubular body, pushing, with the engagement region, the balls radially toward the inside of the tubular body, where the balls enter the corresponding annular slot on the male element.

To disengage such coupling means, one therefore acts by producing the translational motion of the outer jacket away from the port of the tubular body and by overcoming the contrast force developed by the second additional spring.

By translating the outer jacket in this manner, the balls find themselves at the disengagement region, which has a larger diameter, where they are free to snap out of the slot of the male element, which at the same time is pushed outward by the compressed spring that supports the annular side wall.

Generally, in known types of valve, the insertion of the male element causes also the opening of flow control means, which allow the passage of the pressurized fluid from the compressor toward the user device.

Although these quick-coupling valves are widespread and appreciated, they do not allow to adjust the flow-rate of the fluid, since such known flow control means are substantially of the "open or closed" type, i.e., when the male element is inserted, the pressurized fluid is free to pass through the valve, and when the male element is not inserted the passage of the pressurized fluid from the first chamber to the second chamber is instead prevented.

Flow throttling is therefore assigned either to the management of the compressor or to the adjustment means, if any, of the user device; however, the former may often be in a remote position with respect to the user device, while such user device may or may not be provided with the adjustment means, or may have them but not with the characteristics required to adapt the flow to a particular application.

US-A-3 477 688 discloses a conventional quick-connect hose coupling provided with valve means, with a latching sleeve and a valve sleeve mutully biased apart by a spring disposed between the two sleeves.

### Disclosure of the Invention

The aim of the present invention is to provide a quick-coupling valve particularly for pressurized fluids which is capable of obviating the above-mentioned drawbacks of known types of valve.

Within this aim, an object of the present invention is to provide a quick-coupling valve which allows a better management of the flow-rate of the pressurized fluid.

Another object of the present invention is to provide a valve which has the same safety characteristics as known valves.

Another object of the present invention is to provide a valve which can be used easily and intuitively even without particular prior teachings.

Another object of the invention is to provide a valve which is simple to assemble like known types of valve.

Another object of the present invention is to provide a quick-coupling valve particularly for pressurized fluids which can be manufactured cheaply with known systems and technologies.

In accordance with the invention, there is provided a quick-coupling valve as defined in the appended claims.

### Brief description of the drawings

Further characteristics and advantages of the invention will become better apparent from the following detailed description of a preferred but not exclusive embodiment thereof, illustrated by way of non-limiting example in the accompanying drawings, wherein:

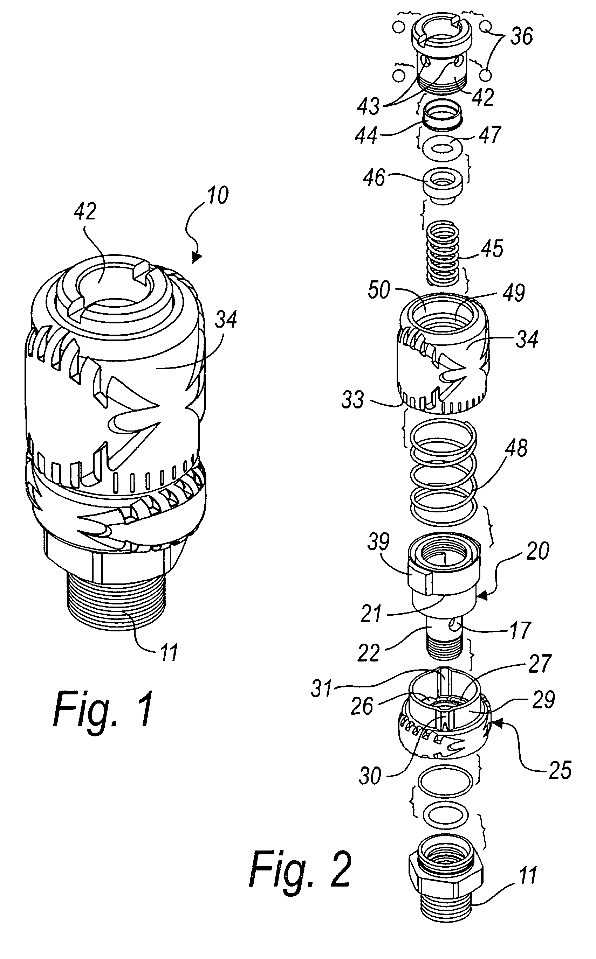

Figure 1 is a perspective view of a valve according to the invention in the closed configuration;
Figure 2 is an exploded perspective view of the valve according to the invention;
Figure 3 is a sectional side view of the valve according to the invention in the closed configuration;
Figure 4 is a partially sectional side view of the valve according to the invention in the open configuration;
Figure 5 is an exploded view of a detail of the flow throttling means;
Figure 6 is the sectional view indicated by the line VI-VI in Figure 3;
Figure 7 is the sectional view indicated by the line VII-VII in Figure 4;
Figure 8 is a sectional view of a detail of the valve according to the invention.

### Ways of carrying out the Invention

With reference to the figures, a quick-coupling valve, particularly for pressurized fluids according to the invention, is generally designated by the reference numeral 10.

The valve 10 comprises, at a first end, a threaded union 11 for reversible fixing to a supply hose and, at the second opposite end, the access to quick-coupling means 12, described in greater detail hereinafter, for a corresponding tubular male element 13, the latter to be understood as being of a per se known type.

The valve 10 is provided internally with a first intake chamber 15 for the pressurized fluid, for example air, the first chamber 15 being reached by the fluid from a supply channel 16 which is closed axially and is provided with holes 17 in a radial direction which connect the union 11 to the first chamber 15.

A second discharge chamber 18 is axially contiguous to the first chamber 15.

The two chambers are separated by reversible flow control means, which are adapted to block the fluid, preventing it from passing through the valve 10 when the male element 13 is not inserted in the valve 10.

The valve has means, associated with the flow control means, for throttling the flow that passes from the first chamber 15 to the second chamber 18.

In this embodiment of the invention, which is an exemplifying embodiment which does not limit its scope, the flow control means and the throttling means comprise a central tubular body 20, which is constituted by a cup-shaped part 21 and by a tubular stem 22, which protrudes from the bottom 23 of the cup-shaped part 21 coaxially thereto, and by an annular body 25, which is contoured so as to surround the bottom 23 of the cup-shaped part 21 and a portion of the tubular stem 22.

The tubular stem 22, provided monolithically with the cup-shaped part 21, constitutes a portion of the supply channel 16 and the holes 17 that connect the channel 16 to the first chamber 15 are provided thereon.

The union 11 is screwed to the free end of the stem 22.

The central compartment of the cup-shaped part 21 provides the second chamber 18 for the discharge of the pressurized fluid.

Two openings 24 are formed on the bottom 23 of the cup-shaped part 21 of the central body 20 and are diametrically opposite in a perimetric position for the passage of the pressurized fluid.

The annular body 25 is provided internally, in a substantially intermediate region in an axial direction, with a flow control and throttling shoulder 26, in which two second openings 27 are formed.

The shoulder 26 surrounds the stem 22, arranging itself adjacent to the bottom 23 of the cup-shaped part 21, and between it and the holes 17 for the intake of fluid into the first chamber 15, forming between itself and the union 11, which is screwed to the free end of the stem 22, the first chamber 15.

The annular body 25 can rotate with respect to the central tubular body 20 between two end positions for full opening and full closure.

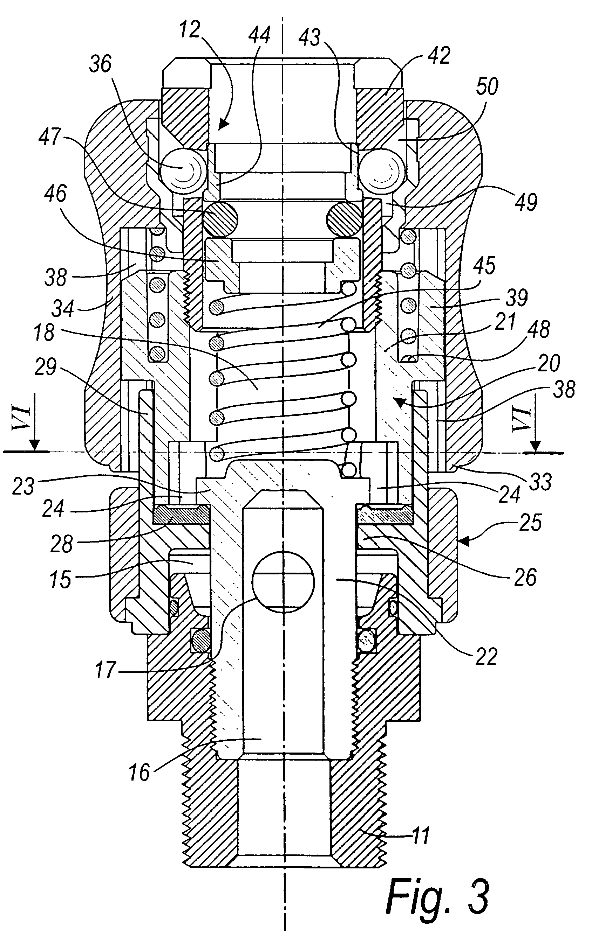

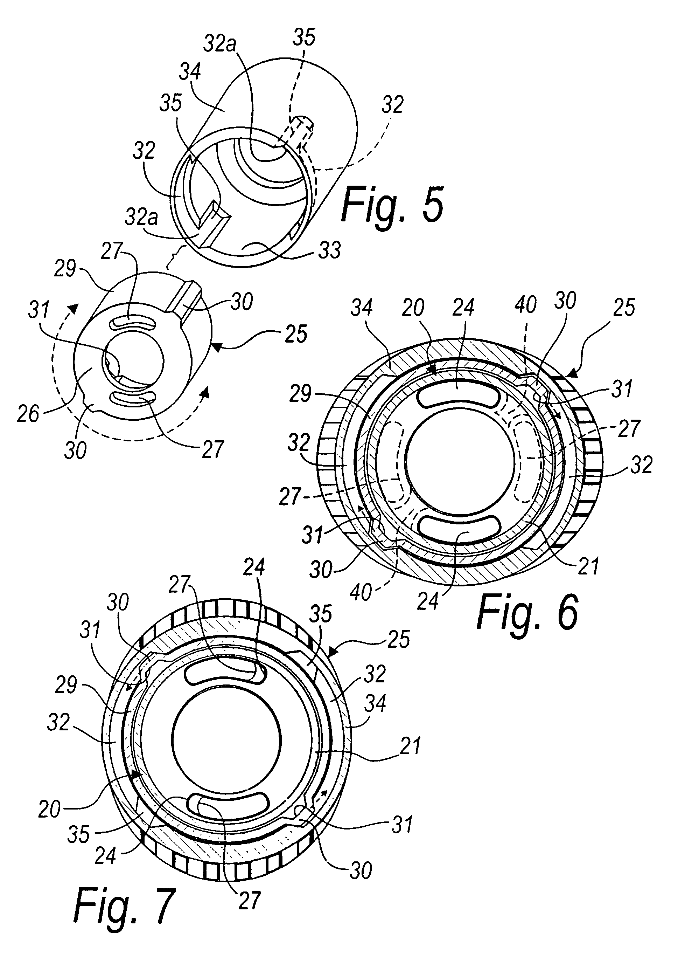

The full closure position is provided by turning the annular body 25 until the second openings 27 affect respective portions without openings of the bottom 23 of the cup-shaped part 21, i.e., they do not affect at all the first openings 24 of the bottom 23; this position is exemplified in Figure 3 and in the corresponding cross-section of Figure 6.

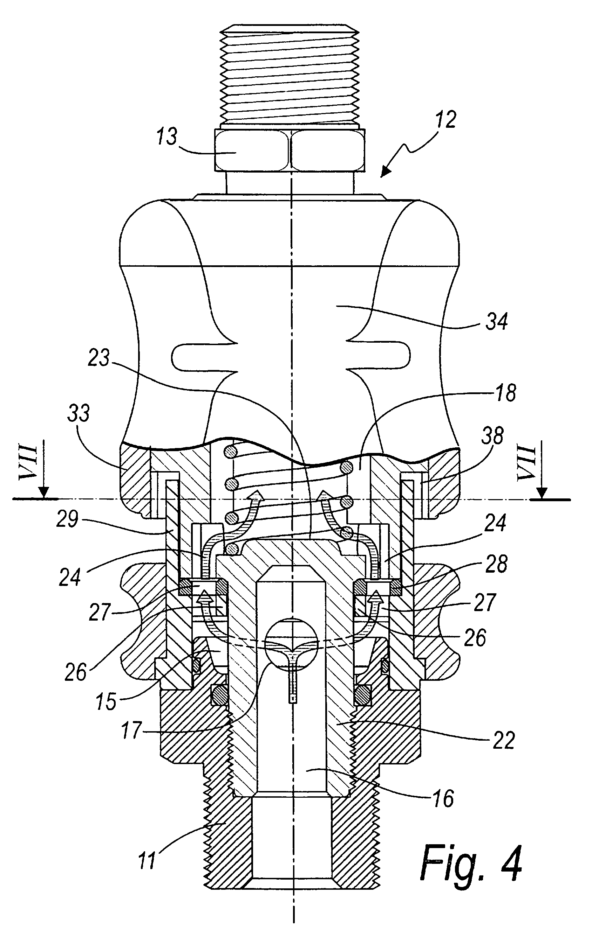

By turning the annular body 25, the second openings 27 begin to affect the first openings 24, increasingly as one proceeds with the relative rotation in the same direction, until the second openings 27 are arranged so as to affect entirely the first openings 24, defining the fully open position of the valve 10, which is shown in Figure 4 and in the corresponding sectional view of Figure 7.

Therefore, the relative rotation between the internal shoulder 26 of the annular body 25 and the bottom 23 of the cup-shaped part 21 of the central tubular body 20 produces the throttling of the flow of pressurized fluid between the two fully open and fully closed positions.

The internal shoulder 26 is covered with a sealing layer 28.

The collar 29 of the annular body 25, adapted to surround the cup-shaped part 21, has two mutually opposite portions 30 in outward relief in a radial direction, each of which is matched by a recess 31 on the inside of the collar 29.

The relief portions 30, during the rotation between the annular body 25 to which they belong and the central tubular body 20, slide and rest in a guiding and stroke limiting slot 32 which is formed within a facing edge 33 of an outer jacket 34.

The outer jacket 34 is intended to be manipulated by a user and is associated with the central tubular body 20 so that the jacket and the body jointly rotate but can perform a translational motion with respect to each other in an axial direction; this is allowed by two mutually opposite guiding hollows 38, which are provided inside the jacket 34, and two corresponding protrusions 39, which expand radially from the cup-shaped part 21 of the central body 20.

The valve 10 also comprises means adapted to prevent the uncoupling of such male element when such valve is opened, and also comprises venting means for the safe uncoupling of the closed valve.

The means for preventing the uncoupling are constituted by the guiding slots 32; the relief portions 30 in fact are higher than the corresponding axial height of the slots 32; this prevents the lowering of the jacket 34 toward the annular body 25, a movement which would release the coupling balls 36 and would allow the uncoupling of the male element 13, until the rotation of the annular body 25 moves the protrusions 30 at the stroke limit for flow control.

At the flow control stroke limit region 32a, each one of the guiding slots 32 lies in an axial direction along a portion 35 which allows the sliding in an axial direction of the protrusions 30 and the consequent lowering of the jacket 34, releasing the balls 36 and providing safe uncoupling of the male element 13.

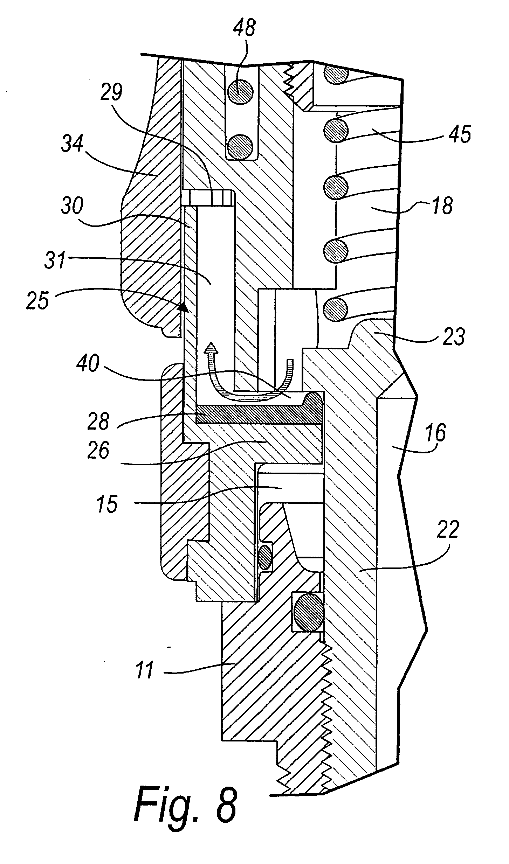

The venting means for safe uncoupling of the male element 13 are constituted by a venting passage 40, shown in Figure 8, which is formed proximate to the flow control stroke limit, but in a position in which completed blocking has already occurred, on the sealing layer 28.

The venting passage 40 connects the second chamber 18, which, when blocking has occurred, the user device is switched off and the male element 13 is still engaged, is generally under pressure, with a corresponding hollow 31 of the collar 29 of the annular body 25.

The passage 40 with the hollow 31 and the jacket 34 form a labyrinth-like discharge duct for the pressurized fluid, which is adapted to allow the outflow of the pressurized air in a safe and controlled manner, preventing, during uncoupling, said fluid from escaping in an uncontrolled manner which is dangerous for the user.

The quick-coupling means, of a per se known type, are constituted, in the exemplifying and non-limiting embodiment of the invention described here, by a tubular ball supporting body 42 provided with substantially radial holes 43 for accommodating the locking balls 36; when the male element 13 is not inserted, the balls 36 are pushed radially toward the outside of the tubular body 42 by an annular side wall 44, which in turn is pushed in an axial direction toward the intake port of the tubular body 42 by a first contrast spring 45 by way of the interposition of an abutment ring 46 for a seal 47.

When the male element 13 is inserted, its tip pushes downward the annular side wall 44, which retains the balls 36, and said balls are pushed so as to exit partially from the holes 43 to enter a corresponding groove, not shown for the sake of simplicity, which is provided on the male element 13.

The outer jacket 34 also cooperates with the exit of the balls in a radial direction toward the inside of the tubular body 42, and the ball supporting tubular body 42 is arranged inside such jacket and is fixed axially to the central tubular body 20; as already described above, the jacket 34 is free to perform an axial translational motion with respect to the ball supporting tubular body 42 and the central tubular body 20.

A second contrast spring 48 is interposed between the outer jacket 34 and the ball supporting tubular body 42 and tends to push the outer jacket 34 toward the outer end of the ball supporting body 42.

The outer jacket 34, in the part in which it surrounds the holes 43 for the balls 36 of the ball supporting body 42, has an engagement region 49, which has a first inside diameter which is smaller than a contiguous disengagement region 50 which has a second inside diameter larger than the first one; the outer jacket 34 is thus contoured so that when the male element 13 pushes inward the annular shoulder 44 and the balls 36 are free to move, it rises with respect to the ball supporting body 42, pushing radially, with the engagement region 49, the balls 36 toward the inside of the body 42, where the balls 36 enter the corresponding annular slot on the male element.

For the disengagement of such coupling means, one acts therefore by producing the translational motion of the outer jacket 34 away from the outer end of the ball supporting body 42 and toward the annular body 25, overcoming the contrast force developed by the second additional spring 48.

By producing the translational motion of the outer jacket 34 in this manner, the balls 36 are located at the disengagement region 50, which has a larger diameter, at which they are free to snap out of the slot of the male element, which at the same time is pushed outward by the first compressed spring 45 which supports the annular side wall 44.

In practice it has been found that the invention thus described achieves the intended aim and objects.

In particular, the present invention provides a quick-coupling valve 10 which allows better management of the flow-rate of the pressurized fluid by way of the possibility to adjust the flow-rate allowed by the rotary coupling between the bottom 23 of the cup-shaped part 21 of the central body 20, with its first openings 24, and the adjacent shoulder 26 of the annular body 25, with its second openings 27.

In fact, by mutually turning the cup-shaped part 21 and the annular body 25, the mutual overlap is achieved, according to requirements, to a greater or smaller extent, of the first openings and the second openings, thus achieving an adjustable flow between the first chamber 15, formed below the shoulder 26, and the second chamber 18, formed above the bottom of the cup-shaped part 21 and inside it.

Further, the invention provides a valve which has the same safety characteristics as known valves, having means for preventing disengagement and venting means as described above.

Moreover, the present invention provides a valve which can be used easily and intuitively even without particular prior teachings, since it is sufficient, in order to throttle the flow, to act by turning with one hand the annular body 25 with respect to the outer jacket 34, which is kept stationary with the user's other hand.

Moreover, the present invention provides a valve which is simple to assemble like known valves, since it is constituted substantially by a tubular central body 20 and a ball supporting tubular body 42 and a union 11 which are screwed to the central body 20 and between which the annular body 25, able to rotate about the central tubular body 20, and the outer chamber 34, able to perform a translational motion with respect to the central tubular body 20, are arranged.

Moreover, the invention provides a quick-coupling valve particularly for pressurized fluids which can be manufactured cheaply with known systems and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A quick-coupling valve, particularly for pressurized fluids, of the type which comprises, at a first end, a threaded coupling (11) for reversible fixing to a supply hose and, at the second opposite end, the access to quick-coupling means (12) for a corresponding tubular male element (13), said valve (10) having internally a first intake chamber (15) for the pressurized fluid and a contiguous second discharge chamber (18), said two chambers (15, 18) being separated by reversible flow control means intended to block the fluid, preventing it from passing through the valve when the male element (13) is not inserted, said valve (10) comprising means which are intended to prevent the uncoupling of said male element (13) when the valve is open and also comprising venting means for safe uncoupling of the male element (13) when the valve is closed, said valve further comprising means, associated with said flow control means, for throttling the flow that passes from said first chamber (15) to said second chamber (18), **characterized in that** said flow control means and said throttling means comprise a central tubular body (20), which is constituted by a cup-shaped part (21) and a tubular stem (22), which protrudes from the bottom (23) of the cup-shaped part (21), coaxially thereto, and by an annular body (25), which is contoured so as to surround the bottom (23) of the cup-shaped part (21) and a portion of the tubular stem (22), two openings (24) being formed on the bottom (23) of the cup-shaped part (21) and being diametrically opposite in a perimetric position for the passage of the pressurized fluid, said annular body (25) being provided internally, in a substantially intermediate region in an axial direction, with a shoulder (26) for flow control and throttling, on which there are two second openings (27), said shoulder (26) surrounding the stem (22) and being arranged so that it is adjacent to the bottom (23) of the cup-shaped part (21), and between said cup-shaped part and the holes (17) for the intake of fluid to the first chamber (15), said shoulder (26) forming, between itself and the union (11), which is screwed to the free end of the stem (22), said first chamber (15), while the central compartment of the cup-shaped part (21) provides the second chamber (18) for the discharge of the pressurized fluid, said annular body (25) being available for rotation with respect to the central tubular body (20) between two fully open and fully blocked end positions.

2. The valve according to the preceding claim, **characterized in that** said fully blocked position is provided by turning the annular body (25) until the second openings (27) affect respective portions which lack openings of the bottom (23) of the cup-shaped part (21), said annular body (25) being adapted to be turned also in the opposite direction to open the valve, causing the progressive overlap of said first openings (24) and second openings (27), up to the fully opened position of the valve (10), in which the openings (24, 27) overlap completely.

3. The valve according to one or more of the preceding claims, **characterized in that** said internal shoulder (26) is covered with a sealing layer (28).

4. The valve according to one or more of the preceding claims, **characterized in that** said collar (29) of the annular body (25), intended to surround the cup-shaped part (21), has two mutually opposite portions (30) in relief toward the outside in a radial direction, each of which is matched by a hollow (31) on the inside of said collar (29), said relief portions (30), during the rotation between the annular body (25) to which they belong and the central tubular body (20), being adapted to slide by resting within a guiding and stroke limiting slot (32) which is formed within the facing edge (33) of the outer jacket (34).

5. The valve according to one or more of the preceding claims, **characterized in that** said means for preventing uncoupling are constituted by the guiding slots (32) themselves, with respect to which the relief portions (30) are higher than the corresponding height of the slots (32) in an axial direction, thus preventing the lowering of the jacket (34) toward the annular body (25), a movement which would release the coupling balls (36) and would allow the uncoupling of the male element (13) when the valve is open.

6. The valve according to the preceding claim, **characterized in that** at the flow control stroke limit region (32a), each of the guiding slots (32) is extended in a radial direction by an extent (35) which allows the sliding in an axial direction of the protrusions (30) and the consequent lowering of the jacket (34), with the release of the balls (3 6) and safe uncoupling of the male element (13).

7. The valve according to the preceding claims, **characterized in that** said venting means for safe uncoupling of the male element (13) are constituted by a venting passage (40), which is formed proximate to the flow control stroke limit (32a), but in a position which already provides full blocking, on the sealing layer (28), said venting passage (40) being adapted to connect the second chamber (18) to a corresponding hollow (31) of the collar (29) of the annular body (25).

## Patentansprüche

1. Ein Schnellkupplungsventil, insbesondere für Druckflüssigkeiten, von der Art, die an einem ersten Ende eine Gewindekopplung (11) zur reversiblen Befestigung an einem Versorgungsschlauch und, am zweiten, gegenüberliegenden Ende, den Zugang zu Schnellkupplungsmitteln (12) für ein entsprechendes rohrförmiges männliches Element (13) umfasst, wobei das Ventil (10) innen eine erste Einlasskammer (15) für die Druckflüssigkeit und eine zweite, benachbarte, Auslasskammer (18) hat, wobei die beiden Kammern (15, 18) durch reversible Durchflussregelungsmittel getrennt sind, die dazu dienen, die Flüssigkeit zu blockieren und daran zu hindern, durch das Ventil zu dringen, wenn das männliche Element (13) nicht eingesetzt ist, wobei das Ventil (10) Mittel umfasst, die dazu dienen, die Lösung des männlichen Elements (13) zu verhindern, wenn das Ventil offen ist, und auch Entlüftungsmittel zur sicheren Lösung des männlichen Elements (13), wenn das Ventil geschlossen ist, umfasst, wobei das Ventil weiter Mittel, die mit den Durchflussregelungsmitteln verbunden sind, umfasst, zum Drosseln der Strömung, die von der ersten Kammer (15) zu der zweiten Kammer (18) verläuft, **dadurch gekennzeichnet, dass** die Durchflussrsgelungsznittel und die Drosselungsmittel einen zentralen rohrförmigen Körper (20) umfassen, der aus einem tassenförmigen Teil (21) und einem robhrförmigen Stamm (22) besteht, der vom Boden (23) des tassenförmigen Teils (21), koaxial dazu, herausragt, und aus einem ringförmigen Körper (25), der so geformt ist, dass er den Boden (23) des tassenförmigen Teils (21) und einen Abschnitt des rohrförmigen Stamms (22) umgibt, wobei zwei Öffnungen (24) am Boden (23) des tassenförmigen Teils (21) geformt sind und in einer perimetrischen Position zum Durchströmen der Druckflüssigkeit diametral gegenüberliegen, wobei der ringförmige Körper (25) innen, in einem im Wesentlichen intermediären Bereich in einer axialen Richtung, mit einer Schulter (26) für Durchflussregelung und Drosselung versehen ist, in der sich zwei zweite Öffnungen (27) befinden, wobei die Schulter (26) den Stamm (22) umgibt und so angeordnet ist, dass sie an den Boden (23) des tassenförmigen Teils (21) angrenzt, und zwischen dem tassenförmigen Teil und den Löchern (17) für den Einlass von Flüssigkeit in die erste Kammer (15), wobei die Schulter (26) zwischen sich selbst und der Kopplung (11), welche am freien Ende des Stamms (22) festgeschraubt ist, die erste Kammer (15) bildet, während das zentrale Fach des tassenförmigen Teils (21) die zweite Kammer (18) für den Auslass der Druckflüssigkeit bildet, wobei der ringförmige Körper (25) zur Drehung im Verhältnis zum zentralen rohrförmigen Körper (20) zwischen zwei vollständig offenen und vollständig blockierten Endpositionen zur Verfügung steht.

2. Das Ventil gemäß dem obigen Anspruch, **dadurch gekennzeichnet, dass** die vollständig blockierte Position hergestellt wird durch Drehen des ringförmigen Körpers (25), bis die zweiten Öffnungen (27) auf entsprechende Abschnitte einwirken, denen Öffnungen des Bodens (23) des tassenförmigen Teils (21) fehlen, wobei der ringförmige Körper (25) ausgebildet ist, um auch in die entgegengesetzte Richtung zum Öffnen des Ventils gedreht zu werden und die progressive Überlappung der ersten Öffnungen (24) und der zweiten Öffnungen (27) zu veranlassen, bis zur vollständig geöffneten Position des Ventils (10), in welcher sich die Öffnungen (24, 27) vollständig überlappen.

3. Das Ventil gemäß einem oder mehreren der obigen Anspruch, **dadurch gekennzeichnet, dass** die innere Schulter (26) mit einer Abdichtungsschicht (28) bedeckt ist.

4. Das Ventil gemäß einem oder mehreren der obigen Ansprüche, **dadurch gekennzeichnet, dass** die Klemmschelle (29) des ringförmigen Körpers (25), die dazu dient, den tassenförmigen Teil (21) zu umgeben, zwei einander gegenüberliegende Abschnitte (30) in Relief zur Außenseite in eine radiale Richtung hat, von denen jeder einem Hohlraum (31) an der Innenseite der Klemmschelle (29) entspricht, wobei die Reliefabschnitte (30) ausgebildet sind, um während der Drehung zwischen dem ringförmigen Körper (25), zu dem sie gehören, und dem zentralen rohrförmigen Abschnitt (20) zu gleiten, durch Aufliegen in einem Führungs- und Hubbegrenzungs-Schlitz (32), welcher im gegenüberliegenden Rand (33) des Außenmantels (34) geformt ist

5. Das Ventil gemäß einem oder mehreren der obigen Ansprüche, **dadurch gekennzeichnet, dass** die Mittel zur Verhinderung der Lösung in den Führungsschlitzen (32) selbst bestehen, mit Bezug auf welche die Reliefabschnitte (30) höher sind als die entsprechende Höhe der Schlitze (32) in einer axialen Richtung, wodurch die Senkung des Mantels (34) zum ringförmigen Körper (25) hin verhindert wird, eine Bewegung, welche die Kopplungskugeln (36) freisetzen und die Lösung des männlichen Elements (13) ermöglichen würde, wenn das Ventil offen ist.

6. Das Ventil gemäß obigem Anspruch, **dadurch gekennzeichnet, dass** im Durchflussregelungs-Hubbegrenzungsbereich (32a) jeder der Führungsschlitze (32) sich in einer Ausdehnung (35) in eine radiale Richtung erstreckt, welche das Gleiten der Vorsprünge (30) in eine axiale Richtung und die daraus folgende Senkung des Mantels (34) ermöglicht, mit Freisetzung der Kugeln (36) und sicherer Lösung des männlichen Elements (13).

7. Das Ventil gemäß den obigen Ansprüche, **dadurch gekennzeichnet, dass** die Entlüftungsmittel zur sicheren Lösung des männlichen Elements (13) in einem Entlüftungsweg (40) bestehen, der nahe der Durchflussregelungs-Hubgrenze (32a) geformt ist, aber in einer Position, die bereits für vollständige Blockierung sorgt, auf der Abdichtungsschicht (28), wobei der Entlüftungsweg (40) ausgebildet ist, um die zweite Kammer (18) mit einem entsprechenden Holraum (31) der Klemmschelle (29) des ringförmigen Körpers (25) zu verbinden.

## Revendications

1. Soupape à raccordement rapide, en particulier pour des fluides sous pression, du type qui comprend, à une première extrémité, un raccordement fileté (11) pour la fixation réversible à un tuyau flexible d'alimentation et, à la deuxième extrémité, l'accès à des moyens de raccordement rapide (12) pour un élément mâle tubulaire (13) correspondant, ladite soupape (10) ayant intérieurement, une première chambre d'admission (15) pour le fluide sous pression et une deuxième chambre de décharge contiguë (18), lesdites deux chambres (15, 18) étant séparées par des moyens de contrôle d'écoulement réversibles prévus pour bloquer le fluide, l'empêchant de passer à travers la soupape lorsque l'élément mâle (13) n'est pas inséré, ladite soupape (10) comprenant des moyens qui sont prévus pour empêcher le découplage dudit élément mâle (13) lorsque la soupape est ouverte et comprenant en outre des moyens d'évacuation pour découpler en toute sécurité l'élément mâle (13) lorsque la soupape est fermée, ladite soupape comprenant en outre des moyens, associés auxdits moyens de contrôle d'écoulement, pour étrangler l'écoulement qui passe de ladite première chambre (15) à ladite deuxième chambre (18), **caractérisée en ce que** lesdits moyens de contrôle d'écoulement et lesdits moyens d'étranglement comprennent un corps tubulaire central (20) qui est constitué par une partie en forme de coupelle (21) et une tige tubulaire (22), qui fait saillie du fond (23) de la partie en forme de coupelle (21) de manière coaxiale par rapport à ce dernier, et par un corps annulaire (25), qui est profilé afin d'entourer le fond (23) de la partie en forme de coupelle (21) et une partie de la tige tubulaire (22), deux ouvertures (24) étant formées au fond (23) de la partie en forme de coupelle (21) et étant diamétralement opposées dans une position périmétrale pour le passage du fluide sous pression, ledit corps annulaire (25) étant prévu intérieurement, dans une région sensiblement intermédiaire dans une direction axiale, avec un épaulement (26) pour le contrôle d'écoulement et l'étranglement, sur lequel on trouve deux deuxièmes ouvertures (27), ledit épaulement (26) entourant la tige (22) et étant agencé de sorte qu'il est adjacent au fond (23) de la partie en forme de coupelle (21), et entre ladite partie en forme de coupelle et les trous (17) pour l'admission du fluide dans la première chambre (15), ledit épaulement (26) formant, entre lui-même et le raccord (11), qui est vissé à une extrémité libre de la tige (22), ladite première chambre (15), alors que le compartiment central de la partie en forme de coupelle (21) fournit la deuxième chambre (18) pour la décharge du fluide sous pression, ledit corps annulaire (25) étant disponible pour la rotation par rapport au corps tubulaire central (20) entre deux positions d'extrémité complètement ouverte et complètement bloquée.

2. Soupape selon la revendication précédente, **caractérisée en ce que** ladite position complètement bloquée est prévue en faisant pivoter le corps annulaire (25) alors que les deuxièmes ouvertures (27) affectent des parties respectives qui manquent d'ouvertures du fond (23) de la partie en forme de coupelle (21), ledit corps annulaire (25) étant adapté pour être pivoté également dans la direction opposée pour ouvrir la soupape, provoquant le chevauchement progressif desdites premières ouvertures (24) et desdites deuxièmes ouvertures (27), jusqu'à la position complètement ouverte de la soupape (10), dans laquelle les ouvertures (24, 27) se chevauchent complètement.

3. Soupape selon une ou plusieurs des revendications précédentes, **caractérisée en ce que** ledit épaulement interne (26) est recouvert avec une couche d'étanchéité (28).

4. Soupape selon une ou plusieurs des revendications précédentes, **caractérisée en ce que** ledit collier (29) du corps annulaire (25), prévu pour entourer la partie en forme de coupelle (21), a deux parties mutuellement opposées (30) en relief vers l'extérieur dans une direction radiale, chacune desquelles correspond à un creux (31) sur l'intérieur dudit collier (29), lesdites parties en relief (30), pendant la rotation entre le corps annulaire (25) auxquelles elles appartiennent et le corps tubulaire central (20) étant adaptées pour coulisser en reposant à l'intérieur d'une fente de guidage et de fin de course (32) qui est formée à l'intérieur du bord en vis-à-vis (33) de la chemise externe (34).

5. Soupape selon une ou plusieurs des revendications précédentes, **caractérisée en ce que** lesdits moyens pour empêcher le découplage sont constitués par les fentes de guidage (32) elles-mêmes, par rapport auxquelles les parties en relief (30) sont plus hautes que la hauteur correspondante des fentes (32) dans une direction axiale, empêchant ainsi l'abaissement de la chemise (34) vers le corps annulaire (25), un mouvement qui devrait libérer les billes de couplage (36) et devrait permettre le découplage de l'élément mâle (13) lorsque la soupape est ouverte.

6. Soupape selon la revendication précédente, **caractérisée en ce qu'**au niveau de la région de fin de course de contrôle d'écoulement (32a), chacune des fentes de guidage (32) est étendue dans une direction radiale ou par une extension (35) qui permet le coulissement dans une direction axiale des saillies (30) et l'abaissement conséquent de la chemise (34), avec la libération des billes (36) et le découplage en toute sécurité de l'élément mâle (13).

7. Soupape selon les revendications précédentes, **caractérisée en ce que** lesdits moyens d'évacuation pour découpler en toute sécurité l'élément mâle (13) sont constitués par un passage d'évacuation (40) qui est formé à proximité de la fin de course de contrôle d'écoulement (32a), mais dans une position qui fournit déjà le blocage complet, sur la couche d'étanchéité (28), ledit passage d'évacuation (40) étant adapté pour raccorder la deuxième chambre (18) à un creux (31) correspondant du collier (29) du corps annulaire (25).
